# EUROPEAN PATENT SPECIFICATION

(11) **EP 2 500 537 B1**
(45) Date of publication and mention of the grant of the patent: **06.01.2016**
(21) Application number: 09851108.2
(22) Date of filing: 09.11.2009
(51) Int. Cl.: F01N 13/00, F01N 3/08, F01N 3/20, F01N 9/00, B01D 53/94, F02D 41/02

(54) **CONTROL APPARATUS FOR AN INTERNAL COMBUSTION ENGINE**
STEUERGERÄT FÜR EINE BRENNKRAFTMASCHINE
DISPOSITIF DE COMMANDE POUR UN MOTEUR À COMBUSTION INTERNE

(43) Date of publication of application: 19.09.2012
(73) Proprietor: TOYOTA JIDOSHA KABUSHIKI KAISHA, Toyota-shi, Aichi-ken, 471-8571 (JP)
(72) Inventor: INOUE, Mikio, Toyota-shi, Aichi-ken, 471-8571 (JP)
(74) Representative: Kuhnen & Wacker
(86) International application number: PCT/JP2009/069055
(87) International publication number: WO 2011/055456

(56) References cited:
- EP-A1- 1 659 270
- EP-A2- 1 030 043
- WO-A1-2005/040571
- JP-A- 6 336 914
- JP-A- 2009 079 523
- JP-A- 2009 138 525

## Description

### Technical Field

The present invention relates to a control apparatus for an internal combustion engine, and more particularly to a control apparatus for an internal combustion engine that includes a NOx catalyst or an S (sulfur) trap catalyst.

### Background Art

The related prior art includes a control apparatus for an internal combustion engine that includes a NOx catalyst such as an NSR (NOx Storage-Reduction) catalyst as disclosed, for example, in JP 2009-138525 A. A NOx catalyst can store nitrogen oxides (NOx) contained in exhaust gas under an oxidative atmosphere, and reduce the stored NOx under a reducing atmosphere. However, the performance of a NOx catalyst is decreased by sulfur that is contained in exhaust gas depositing on the catalyst. Therefore, according to the prior art, when introducing a reducing agent into the NOx catalyst, the catalyst temperature (bed temperature) is detected by a sensor, and it is attempted to estimate the amount of sulfur deposition based on the degree to which the catalyst temperature increases.

An exhaust purification system for an internal combustion engine comprising a storage and reducing type NOx catalyst provided at an exhaust passage, an SOx absorbent provided at an upstream side of the NOx catalyst, a reducing agent feeding means provided at an upstream side of the SOx absorbent, and a sulfur trap rate detecting means for detecting an S trap rate of the SOx absorbent is furthermore disclosed by EP 1 659 270 A. In the exhaust purification system, when the sulfur trap rate is smaller than a predetermined value, the reducing agent is fed by the reducing agent feeding means so that the amount of temperature change of the SOx absorbent before and after the feed of the reducing agent by the reducing agent feeding means is made to become smaller than the amount of temperature change of the NOx catalyst before and after the feed of the reducing agent and the temperature of the SOx absorbent before and after the feed of the reducing agent is made to become higher than an sulfur trap rate increasing temperature and is made to become lower than an Sulfur ingredient disassociation temperature for disassociation the sulfur ingredient from said SOx absorbent, thereby making the NOx catalyst high in temperature and making the air-fuel ratio rich so that the SOx stored in the NOx catalyst is released.

### Summary of Invention

### Technical Problem

According to the above described prior art, a configuration is adopted that estimates the amount of sulfur deposition based on the degree to which the catalyst temperature increases when a reducing agent is introduced into the catalyst. However, when the amount of sulfur deposition is large, there is the problem that if the reducing agent is introduced in a careless manner, high concentration sulfur may temporarily desorb from the catalyst and be emitted to the atmosphere, and as a result the exhaust emissions deteriorate. Further, when a state is supposed in which a large amount of sulfur is deposited on a NOx catalyst, if a reducing agent is introduced in a situation in which it is difficult for sulfur to desorb from the NOx catalyst (a situation in which the temperature of the catalyst is low, and the exhaust air-fuel ratio is on the lean side of the stoichiometric ratio), a long time is required until the catalyst temperature rises. Accordingly, in such a case, there is also the problem that the amount of reducing agent (fuel) that is consumed increases and the fuel consumption efficiency deteriorates, and an extra heat load is applied to the catalyst.

The present invention has been conceived to solve the above described problems, and an object of the present invention is to provide a control apparatus for an internal combustion engine that can accurately estimate an amount of sulfur deposition on a main catalyst while avoiding the emission of sulfur and a deterioration in fuel consumption efficiency.

### Means for Solving the Problem

A first aspect of the present invention is a control apparatus for an internal combustion engine, comprising:
a main catalyst that is provided in an exhaust passage of the internal combustion engine, and comprises either a NOx catalyst that stores NOx contained in an exhaust gas or a sulfur trap catalyst that traps SOx contained in an exhaust gas;
a sub-catalyst that is provided in the exhaust passage on an upstream side of the main catalyst, and that comprises a storage agent that stores SOx contained in an exhaust gas;
catalyst temperature detection means that detects a catalyst temperature that is a temperature of the sub-catalyst or a temperature of an exhaust gas that passes through the sub-catalyst, on an upstream side of the main catalyst; and
regeneration control means that performs at least sulfur-regeneration control for desorbing SOx that is stored in the sub-catalyst;
characterized by further comprising sulfur deposition amount estimation means that calculates an amount of an increase in the catalyst temperature during execution of the sulfur-regeneration control, and estimates an amount of sulfur deposition on the main catalyst based on the temperature increase amount.

In a second aspect of the present invention, wherein the sub-catalyst is formed to have a smaller heat capacity than the main catalyst.

In a third aspect of the present invention, wherein the sub-catalyst is formed using a material that has a lower basicity than the main catalyst.

In a fourth aspect of the present invention, wherein the main catalyst comprises an OSC material that has an oxygen storage capacity.

In a fifth aspect of the present invention, wherein:
the regeneration control means executes the sulfur-regeneration control in a case where an operating state of the internal combustion engine is a decelerating operating state, an idling operating state, or a state immediately before stopping operation; and
the sulfur deposition amount estimation means is configured to estimate the amount of sulfur deposition during the sulfur-regeneration control.

In a sixth aspect of the present invention, the control apparatus for an internal combustion engine further comprising sulfur concentration calculation means that, when the sulfur-regeneration control is repeatedly executed at intervals, calculates a sulfur concentration in a fuel based on a fuel consumption amount and an oil consumption amount during the interval and an estimated value of the amount of sulfur deposition.

In a seventh aspect of the present invention, the control apparatus for an internal combustion engine further comprising correction means that corrects an inflow amount of sulfur that flows into the main catalyst based on a sulfur concentration in the fuel.

In an eighth aspect of the present invention, the control apparatus for an internal combustion engine further comprising notification means that, when a sulfur concentration in the fuel is higher than a reference value, notifies that the sulfur concentration is high.

### Advantageous Effects of Invention

According to the first invention, since the sub-catalyst is arranged at a position that is further on an upstream side than the main catalyst, after the start of sulfur-regeneration control, the temperature of the sub-catalyst can be caused to reach a temperature at which sulfur is desorbable earlier than the main catalyst. Therefore, it is possible to detect a temperature increase amount of the sub-catalyst whose temperature has risen as the result of a sulfur desorption reaction before the temperature of the main catalyst reaches the temperature at which sulfur is desorbable (that is, before the sulfur desorbs from the main catalyst), and the amount of sulfur deposition on the main catalyst can be accurately estimated based on the temperature increase amount. Thus, control to avoid the emission of sulfur and a deterioration in the fuel consumption efficiency can be executed based on the estimation result. Further, even if sulfur desorbs from the sub-catalyst during a period in which the temperature increase amount of the sub-catalyst is being detected, the desorbed sulfur can be stored by the main catalyst on the downstream side. Accordingly, exhaust emissions and fuel consumption efficiency can be improved.

According to the second invention, since the heat capacity of the sub-catalyst is smaller than that of the main catalyst, after the start of sulfur-regeneration control, the temperature of the sub-catalyst can be caused to reach the temperature at which sulfur is desorbable earlier than the main catalyst. Consequently, it is possible to adequately secure a period from a time point when the sub-catalyst temperature reaches a temperature at which sulfur is desorbable until a time point immediately before the temperature of the main catalyst reaches a temperature at which sulfur is desorbable, more specifically, it is possible to adequately secure a detection period for detecting a temperature increase amount of the sub-catalyst. Accordingly, for example, even in a case where the temperature of the sub-catalyst rises moderately, the temperature increase amount can be accurately detected during the detection period. Thus, the accuracy of estimating the amount of sulfur deposition based on the temperature increase amount can be improved.

According to the third invention, by using a material that has a low basicity in the sub-catalyst, a temperature at which sulfur is desorbable of the sub-catalyst can be set lower than that of the main catalyst. Accordingly, a period for detecting a temperature increase amount of the sub-catalyst can be increased, and the temperature increase amount can be accurately detected during the detection period. Thus, the accuracy of estimating the amount of sulfur deposition based on the temperature increase amount can be improved.

According to the fourth invention, in the presence of oxygen that has been stored in an OSC material, the main catalyst can efficiently capture SOx that desorbs from the sub-catalyst. Therefore, even if sulfur desorbs from the sub-catalyst during a detection period in which a temperature increase amount of the sub-catalyst is being detected, exhaust emissions can be maintained in a favorable state.

According to the fifth invention, during execution of a deceleration operation or an idling operation, the operating state of the internal combustion engine is stable and a change in the temperature or the flow rate of the exhaust gas is small. Further, in a state immediately before the internal combustion engine stops, the temperature and the flow rate of the exhaust gas are in a stable state. Accordingly, if a process to estimate an amount of sulfur deposition is executed in these operating states, the temperature increase amount of the sub-catalyst can be accurately detected in a state in which there is little disturbance. Thus, the accuracy of estimating the amount of sulfur deposition can be increased.

According to the sixth invention, sulfur concentration calculation means can calculate a sulfur concentration in a fuel based on a fuel consumption amount and an oil consumption amount during an interval between periods of sulfur-regeneration control as well as an estimated value of the amount of sulfur deposition. It is thereby possible to carry out appropriate control for suppressing the amount of sulfur that is deposited on a catalyst based on the sulfur concentration in the fuel.

According to the seventh invention, correction means can correct an inflow amount of sulfur that flows into the main catalyst based on the sulfur concentration in the fuel, and can suppress as much as possible sulfur poisoning of the main catalyst.

According to the eighth invention, when a sulfur concentration in a fuel is higher than a reference value, notification means can notify a driver or the like of that situation, and can thereby call the attention of the driver or the like to the fact that a fuel with a high sulfur concentration is being used.

### Brief Description of Drawings

[Figure 1] Figure 1 is an overall configuration diagram for describing the system configuration of Embodiment 1 of the present invention.
[Figure 2] Figure 2 is an explanatory diagram that shows the configuration of an exhaust system according to Embodiment 1 of the present invention.
[Figure 3] Figure 3 is a characteristics diagram that illustrates temperature changes of the main catalyst and the sub-catalyst during sulfur-regeneration control according to Embodiment 1 of the present invention.
[Figure 4] Figure 4 is a flowchart that illustrates control executed by the ECU according to Embodiment 1 of the present invention.
[Figure 5] Figure 5 is an explanatory drawing that illustrates the configuration of an exhaust system according to Embodiment 2 of the present invention.
[Figure 6] Figure 6 is a characteristics diagram that illustrates temperature changes of the main catalyst and the sub-catalyst during sulfur-regeneration control according to Embodiment 2 of the present invention.
[Figure 7] Figure 7 is an explanatory diagram that illustrates the configuration of an exhaust system according to Embodiment 3 of the present invention.
[Figure 8] Figure 8 is a characteristics diagram showing the exhaust air-fuel ratio on the upstream side and the downstream side of the main catalyst.
[Figure 9] Figure 9 is an explanatory drawing that illustrates the configuration of an exhaust system according to Embodiment 4 of the present invention.
[Figure 10] Figure 10 is an explanatory diagram that illustrates a state in which the amount of sulfur deposition is estimated during a deceleration operation or an idling operation.
[Figure 11] Figure 11 is a flowchart that illustrates control executed by the ECU according to Embodiment 4 of the present invention.

### Description of Embodiments

### Embodiment 1

### [Configuration of Embodiment 1]

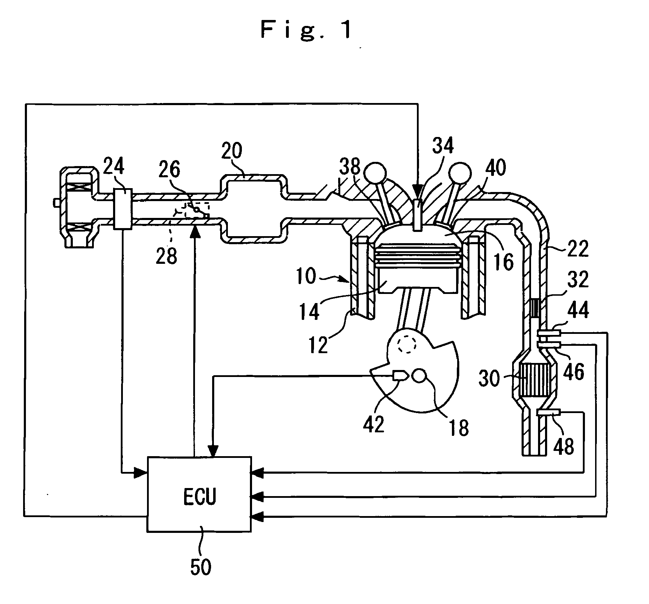

Hereunder, Embodiment 1 of the present invention is described while referring to Figures 1 to 4. Figure 1 is an overall configuration diagram for describing the system configuration of Embodiment 1 of the present invention. The system of the present embodiment includes, for example, a multi-cylinder internal combustion engine 10 constituted by a diesel engine. A piston 14 is provided inside each cylinder 12 of the internal combustion engine 10 in a manner in which each piston 14 is capable of a reciprocating action. The pistons 14 form a combustion chamber 16 inside each cylinder 12. Each piston 14 is connected to a crankshaft 18 of the internal combustion engine 10.

The internal combustion engine 10 includes an intake passage 20 that draws intake air into each cylinder 12, and an exhaust passage 22 through which exhaust gas is discharged from inside each cylinder 12. An air flow meter 24 that detects an intake air amount, and a throttle valve 26 that increases or decreases the intake air amount are provided in the intake passage 20. The throttle valve 26 is constituted, for example, by an electronically controlled valve, and is driven by a throttle motor 28 based on a degree of accelerator opening or the like. A main catalyst 30 and a sub-catalyst 32 are provided in the exhaust passage 22. These catalysts are described in detail later. Each cylinder 12 is provided with a fuel injection valve 34 that injects fuel into the cylinder, as well as an intake valve 38, an exhaust valve 40 and the like.

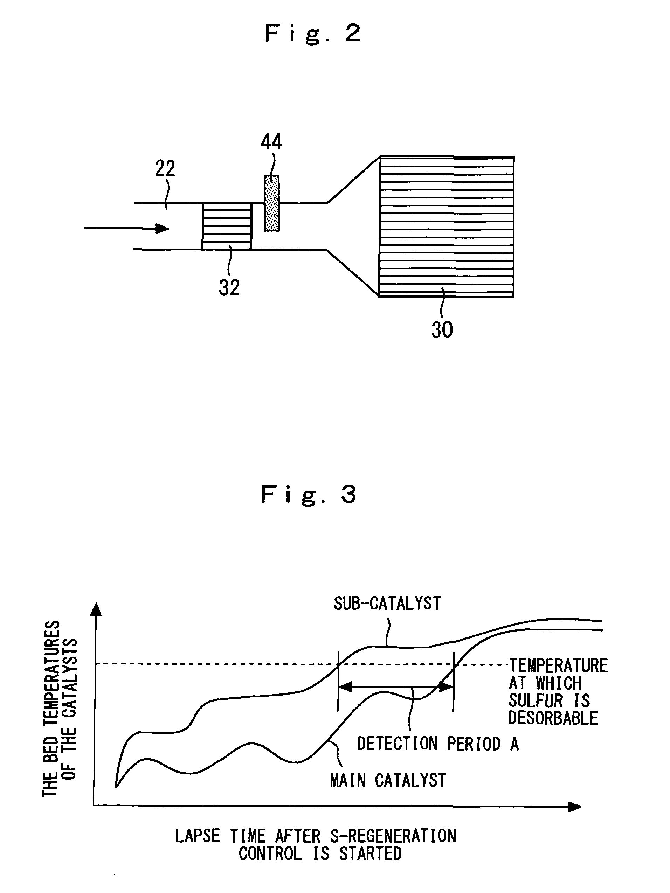

The system of the present embodiment also includes a sensor system including a crank angle sensor 42, a catalyst temperature sensor 44, and air-fuel ratio sensors 46 and 48 and the like, and an ECU (Electronic Control Unit) 50 that controls the operating state of the internal combustion engine 10. The crank angle sensor 42 outputs a signal that is synchronous with rotation of a crankshaft 18, and the ECU 50 can detect the number of engine revolutions and the crank angle based on the aforementioned signal. The catalyst temperature sensor 44 constitutes catalyst temperature detection means of the present embodiment, and is provided in the exhaust passage 22 at a position that is on an upstream side of the main catalyst 30 and a downstream side of the sub-catalyst 32. The catalyst temperature sensor 44 detects, as a catalyst temperature, the temperature (bed temperature) of the sub-catalyst 32 or the temperature of exhaust gas immediately after passing through the sub-catalyst 32. In this connection, although a configuration in which an exhaust gas temperature on the downstream side of the sub-catalyst 32 is detected by the catalyst temperature sensor 44 is illustrated in Figure 1 and Figure 2, the present invention is not limited thereto, and a configuration may also be adopted in which the bed temperature of the sub-catalyst 32 is detected by the catalyst temperature sensor 44.

The air-fuel ratio sensor 46 arranged on the upstream side detects an exhaust air-fuel ratio at a position that is on the upstream side of the main catalyst 30 and on the downstream side of the sub-catalyst 32. The air-fuel ratio sensor 48 arranged on the downstream side detects an exhaust air-fuel ratio at a position that is on the downstream side of the main catalyst 30. The ECU 50 can perform air-fuel ratio feedback control that controls so that the exhaust air-fuel ratio is in the vicinity of the theoretical (stoichiometric) air-fuel ratio by adjusting the fuel injection amount based on signals from the air-fuel ratio sensors 46 and 48. In addition to the aforementioned sensors 42 to 48 and the air flow meter 24, the sensor system includes various sensors that are necessary for control of the vehicle and the internal combustion engine. Examples of such sensors include a water temperature sensor that detects a coolant temperature of the internal combustion engine and an accelerator opening degree sensor that detects the degree of accelerator opening. These sensors are connected to the input side of the ECU 50.

Various actuators including the above described throttle motor 28 and fuel injection valve 34 are connected to the output side of the ECU 50. The ECU 50 controls the operating state of the internal combustion engine by driving each actuator while detecting the operating state by means of the sensor system. As a specific example, the ECU 50 sets an injection amount and injection timing of fuel based on an intake air amount that is detected by the air flow meter, and executes fuel injection control that drives the fuel injection valve 34 based on the setting contents.

### [Features of Embodiment 1]

Figure 2 is an explanatory diagram that shows the configuration of an exhaust system according to Embodiment 1 of the present invention. A feature of the present embodiment is that the amount of sulfur deposition on the main catalyst 30 is estimated based on the temperature of the sub-catalyst 32. First, the main catalyst 30 is described. The main catalyst 30 is constituted by, for example, a NOx catalyst. More specifically, the main catalyst 30 can store NOx contained in exhaust gas under an oxidative atmosphere, and can reduce the stored NOx under a reducing atmosphere. The ECU 50 executes NOx reduction control at an appropriate timing to reduce the NOx that is stored in the main catalyst 30. According to the NOx reduction control, for example, the exhaust air-fuel ratio is temporarily enriched by performing rich spike control or the like, and fuel is added to the exhaust gas by means of a fuel addition valve or the like. As a result, the exhaust air-fuel ratio changes to a ratio that is richer than the theoretical air-fuel ratio and the atmosphere becomes a reducing atmosphere. Hence, the main catalyst 30 can reduce the stored NOx.

On the other hand, under an oxidative atmosphere, the NOx catalyst stores sulfur oxides (SOx) contained in the exhaust gas. The stored SOx is not released at the catalyst temperature (for example, approximately 250°C) during NOx reduction control. When the SOx deposits on the catalyst, the NOx storage capacity of the catalyst decreases and so-called "sulfur poisoning" occurs. Therefore, the ECU 50 executes sulfur-regeneration control at an appropriate timing to regenerate the NOx storage capacity of the main catalyst 30. In the sulfur-regeneration control, a fuel that serves as a reducing agent is added to the catalyst in a state in which the catalyst bed temperature has been increased to a predetermined temperature (hereunder, referred to as "temperature at which sulfur is desorbable") at which sulfur in the catalyst can be desorbed. Thus, the sulfur that has accumulated on the main catalyst 30 can be desorbed under a reducing atmosphere. In this connection, the temperature at which sulfur is desorbable differs according to the material and component ratio and the like of the catalyst, and an example thereof is a high temperature of 600°C or more.

However, when only sulfur-regeneration control is executed, depending on the state of the main catalyst 30, there is a risk that sulfur deposited on the catalyst will be emitted in exhaust gas, and that extra reducing agent will be required. Therefore, according to the present embodiment, prior to increasing the temperature of the main catalyst 30 to a temperature at which sulfur is desorbable, the amount of sulfur deposition on the main catalyst 30 is estimated utilizing the sub-catalyst 32. The sub-catalyst 32 is, for example, constituted by a small-sized catalyst whose heat capacity is less than that of the main catalyst 30, and is arranged on the upstream side of the main catalyst 30. Further, a storage agent that stores SOx contained in exhaust gas is coated on the sub-catalyst 32, and a temperature at which sulfur is desorbable of the storage agent is approximately equal to that of the main catalyst 30. Therefore, the sulfur in the exhaust gas deposits to the same degree on both of the catalysts 30 and 32 in a normal operating state other than a state in which sulfur-regeneration control is being executed.

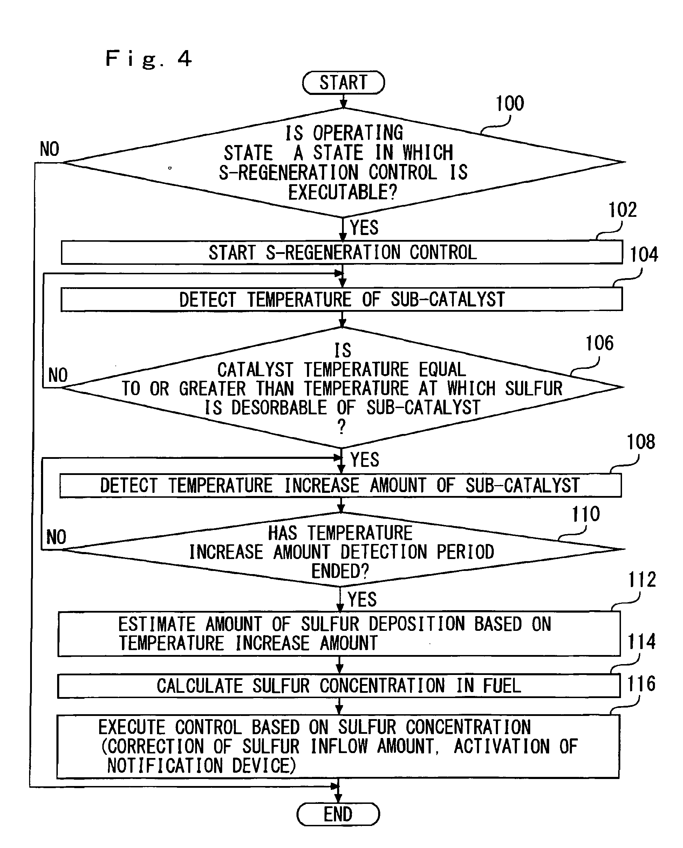

Since the sub-catalyst 32 is arranged on the upstream side of the main catalyst 30 and has a smaller heat capacity than the main catalyst 30, after the start of sulfur-regeneration control the temperature of the sub-catalyst 32 reaches a temperature at which sulfur is desorbable earlier than the main catalyst 30. Figure 3 is a characteristics diagram that illustrates temperature changes of the main catalyst and the sub-catalyst during sulfur-regeneration control according to Embodiment 1 of the present invention. As shown in Figure 3, when sulfur-regeneration control is started, the bed temperatures of the catalysts 30 and 32 increase together with the exhaust gas temperature. However, due to the aforementioned reasons, a time difference arises with respect to the timing at which the respective bed temperatures of the two catalysts reach a temperature at which sulfur is desorbable. During a period corresponding to this time difference (detection period A in Figure 4), SOx is not desorbed from the main catalyst 30 that has not reached the temperature at which sulfur is desorbable. In contrast, since the temperature of the sub-catalyst 32 reaches the temperature at which sulfur is desorbable at the time point at which the detection period A starts, SOx stored in the sub-catalyst 32 is desorbed during the detection period A. Because the desorption reaction is an exothermic reaction, the bed temperature of the sub-catalyst 32 increases as SOx is desorbed.

More specifically, an amount by which the temperature of the sub-catalyst 32 increases during the detection period A has a characteristic such that the temperature increase amount increases in accordance with the amount of SOx that has been stored in the catalyst. Therefore, when it is considered that sulfur contained in the exhaust gas is deposited to the same degree on the catalysts 30 and 32, the amount of sulfur deposition on the main catalyst 30 can be estimated based on the amount of increase in the catalyst temperature that is detected by the catalyst temperature sensor 44. Therefore, map data that shows the relationship between a temperature increase amount of the sub-catalyst 32 during the detection period A and the amount of sulfur deposition on the main catalyst 30 in a data format is previously stored in the ECU 50. The map data is set so that an estimated value of the amount of sulfur deposition increases in accordance with an increase in the temperature increase amount of the sub-catalyst 32.

After starting sulfur-regeneration control, the ECU 50 detects a temperature increase amount in the detection period A based on the output of the catalyst temperature sensor 44. In this case, the ECU 50 determines the start of the detection period A at a time point when a temperature detected by the catalyst temperature sensor 44 becomes equal to or greater than the temperature at which sulfur is desorbable. Further, the ECU 50 estimates the bed temperature of the main catalyst 30 based on the temperature detected by the catalyst temperature sensor 44, and determines that the detection period A ended at a time point immediately before the bed temperature reached the temperature at which sulfur is desorbable. In this connection, according to the present invention a configuration may also be adopted in which a temperature sensor or the like is provided that detects the bed temperature of the main catalyst 30 in order to determine the ending time point of the detection period A. The ECU 50 estimates the amount of sulfur deposition on the main catalyst 30 based on the temperature increase amount of the sub-catalyst 32 and the aforementioned map data, and can execute suitable control to deal with the estimated amount of sulfur deposition. Hereunder, an example of control that is executed in accordance with the amount of sulfur deposition is described.

### (Control corresponding to the amount of sulfur deposition)

Sulfur-regeneration control is repeatedly executed by the ECU 50 at suitable intervals. Because the amount of sulfur that is deposited on the sub-catalyst 32 is comparatively small compared to the amount of sulfur deposited on the main catalyst 30, it can be considered that the amount of sulfur deposition on the sub-catalyst 32 becomes approximately zero each time sulfur-regeneration control is executed. Accordingly, the amount of sulfur deposition that is estimated (detected) by the above described method during execution of the sulfur-regeneration control corresponds to the amount of SOx emitted from the internal combustion engine during a period from the preceding sulfur-regeneration control to the current sulfur-regeneration control, that is, during an interval between periods of sulfur-regeneration control. In this connection, the sulfur deposited on a catalyst includes sulfur that is originally included in the fuel, and sulfur in lubricating oil of the internal combustion engine that gets mixed in with the fuel together with the oil.

Therefore, the ECU 50 calculates the sulfur concentration in the fuel based on a fuel consumption amount and an oil consumption amount during the aforementioned interval as well as the estimated value of the amount of sulfur deposition (SOx emission amount). The ECU 50 is configured to correct the amount of SOx that flows into the main catalyst 30 based on the calculated sulfur concentration. More specifically, the ECU 50 can calculate the fuel consumption amount during the interval by first adding up the amounts of fuel that are injected by each cylinder in each combustion cycle. Further, since there is a correlation between the oil consumption amount (amount of lubricating oil that gets mixed into the cylinder) and parameters such as the number of engine revolutions and the load factor, map data that shows the relationship between these parameters and the oil consumption amount per combustion cycle is previously stored in the ECU 50. By adding up oil consumption amounts that are calculated based on these parameters and the map data, the ECU 50 can calculate the oil consumption amount during the aforementioned interval, and can calculate the sulfur concentration in the fuel.

If the sulfur concentration in the fuel is high, for example, the ECU 50 corrects the amount of SOx that flows into the main catalyst 30 by adjusting the fuel injection amount, and thereby suppresses the amount of sulfur deposition on the main catalyst 30. Further, if the sulfur concentration in the fuel is higher than a predetermined reference value, the ECU 50 activates a notification device (unshown) for notifying the driver of the vehicle that the sulfur concentration in the fuel is high. The notification device is a device that performs a notification operation by means of a lamp, a buzzer, or a sound.

### [Specific processing to realize Embodiment 1]

Figure 4 is a flowchart that illustrates control executed by the ECU according to Embodiment 1 of the present invention. The routine shown in Figure 4 is repeatedly executed during operation of the internal combustion engine. According to this routine, first, the ECU 50 determines whether or not the internal combustion engine is in an operating state in which sulfur-regeneration control can be executed (for example, whether the operating state is one in which operability is not adversely affected even if sulfur-regeneration control is executed) (step 100). If the result determined in step 100 is negative, the ECU 50 ends the current control. In contrast, if the result in step 100 is affirmative, the ECU 50 starts sulfur-regeneration control (step 102).

Next, the ECU 50 detects the temperature of the sub-catalyst 32 based on the output of the catalyst temperature sensor 44 (step 104), and determines whether or not the detected catalyst temperature is equal to or greater than the temperature at which sulfur is desorbable of the sub-catalyst 32 (step 106). If the result determined in step 106 is negative, the ECU 50 repeats the processing of steps 104 and 106 until the result determined in step 106 is affirmative. When the result determined in step 106 is affirmative, it means that the time point is the starting time point of the aforementioned detection period A, and therefore the ECU 50 detects the temperature increase amount of the sub-catalyst 32 based on the output of the catalyst temperature sensor 44 (step 108). Concurrently with this detection processing, the ECU 50 determines whether or not the ending time point of the detection period A has been reached by the above described method (step 110). If the result determined in step 110 is negative, the ECU 50 repeats the processing of steps 108 and 110 until the result determined in step 110 is affirmative.

When the result determined in step 110 is affirmative, the ECU 50 estimates the amount of sulfur that is deposited on the main catalyst 30 based on the detected temperature increase amount and the map data (step 112). In the subsequent processing, as described above, the ECU 50 calculates the fuel consumption amount and the oil consumption amount during an interval between periods of sulfur-regeneration control, and calculates the sulfur concentration in the fuel based on the calculated values and the estimated value of the amount of sulfur deposition (step 114). Subsequently, the ECU 50 executes control that corresponds to the amount of sulfur deposition based on the calculated value of the sulfur concentration (step 116).

As described above, according to the present embodiment the sub-catalyst 32 is arranged further on the upstream side than the main catalyst 30, and has a smaller heat capacity than the main catalyst 30. Consequently, after sulfur-regeneration control starts, the temperature of the sub-catalyst 32 can be caused to reach a temperature at which sulfur is desorbable earlier than the temperature of the main catalyst 30. Thus, before the temperature of the main catalyst 30 reaches a temperature at which sulfur is desorbable (that is, before sulfur desorbs from the main catalyst 30), the temperature increase amount of the sub-catalyst 32 whose temperature has been increased by a sulfur desorption reaction can be detected, and the amount of sulfur deposition on the main catalyst 30 can be accurately estimated based on the temperature increase amount that is detected.

The ECU 50 can execute control to avoid sulfur emissions and a deterioration in the fuel consumption efficiency based on the estimated result for the amount of sulfur deposition. Further, during a period in which a temperature increase amount of the sub-catalyst 32 is being detected, even if sulfur desorbs from the sub-catalyst 32, the sulfur can be stored by the main catalyst 30 on the downstream side. Accordingly, it is possible to reliably prevent the emission of sulfur in exhaust gas or sulfur that desorbs from the catalyst to outside, and to improve the exhaust emissions and the fuel consumption efficiency.

In particular, by making the heat capacity of the sub-catalyst 32 less than that of the main catalyst 30, it is possible to adequately secure a period from when the temperature of the sub-catalyst 32 reaches a temperature at which sulfur is desorbable until a time point immediately before the temperature of the main catalyst 30 reaches a temperature at which sulfur is desorbable, that is, the detection period A for detecting a temperature increase amount of the sub-catalyst 32. Accordingly, for example, even in a case where the temperature of the sub-catalyst 32 increases moderately, the temperature increase amount can be accurately detected during the detection period A. Thus, the accuracy of estimating the amount of sulfur deposition based on the temperature increase amount can be enhanced.

According to the present embodiment, the sulfur concentration in the fuel can be calculated based on the fuel consumption amount and oil consumption amount during an interval between periods of sulfur-regeneration control and an estimated value for the amount of sulfur deposition. Therefore, suitable control can be performed to inhibit the amount of sulfur deposition on the catalyst based on the sulfur concentration in the fuel. More specifically, an inflow amount of sulfur that flows into the main catalyst 30 can be corrected based on the sulfur concentration in the fuel, and sulfur poisoning of the main catalyst 30 can be suppressed as much as possible. Further, when the sulfur concentration in the fuel is higher than a reference value, a driver or the like can be made aware of that state to thereby draw the attention of the driver to the fact that fuel with a high sulfur concentration is being used.

### (Modification Example of Embodiment 1)

A NOx catalyst is used as the main catalyst 30 in Embodiment 1. However, the present invention is not limited thereto, and the main catalyst 30 may be constituted by an S trap catalyst that traps and releases SOx contained in exhaust gas. As is generally known, an S trap catalyst traps SOx when the exhaust air-fuel ratio is leaner than the stoichiometric air-fuel ratio. Further, when the exhaust air-fuel ratio is leaner than the stoichiometric air-fuel ratio and the catalyst temperature is equal to or greater than a predetermined temperature at which sulfur is desorbable, SOx that has been trapped by the S trap catalyst is desorbed. Therefore, according to the present invention, the same actions and effects as those in the case of the NOx catalyst can be obtained even when an S trap catalyst is used as the main catalyst 30, and thus the scope of application the invention can be broadened.

### Embodiment 2

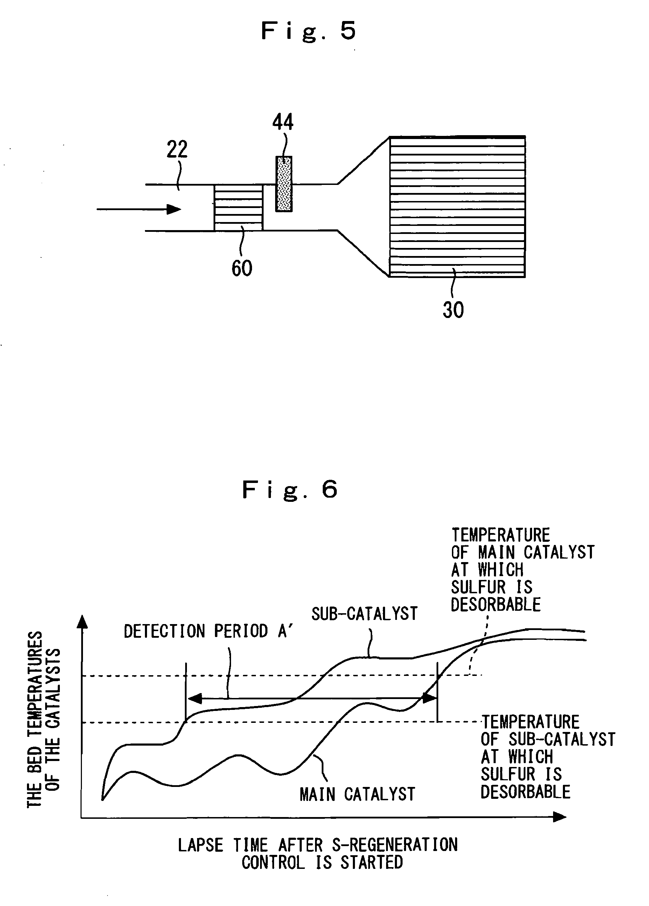

Next, Embodiment 2 of the present invention is described referring to Figure 5 and Figure 6. Although the present embodiment adopts the same system configuration and control (Figure 1 and Figure 4) as the foregoing Embodiment 1, a constituent material of the sub-catalyst is different to that of Embodiment 1. Note that, according to the present embodiment, components that are the same as in Embodiment 1 are denoted by the same reference symbols, and a description of such components is omitted.

### [Features of Embodiment 2]

Figure 5 is an explanatory drawing that illustrates the configuration of an exhaust system according to Embodiment 2 of the present invention. Similarly to Embodiment 1, a sub-catalyst 60 is constituted by a small-capacity catalyst that carries a SOx storage agent, and is arranged on an upstream side of a main catalyst 30. The sub-catalyst 60 is formed using a material that has a lower basicity than the main catalyst 30. Consequently, a temperature at which sulfur is desorbable of the sub-catalyst 60 is set to a lower temperature than that of the main catalyst 30. In this connection, an object of the system of the present embodiment is to purify NOx by means of the main catalyst 30, and since the system is not dependent on the NOx purification performance of the sub-catalyst 60, there is no effect on the purification performance of the overall system even if the material or the temperature at which sulfur is desorbable of the sub-catalyst 60 is changed.

Figure 6 is a characteristics diagram that illustrates temperature changes of the main catalyst and the sub-catalyst during sulfur-regeneration control according to Embodiment 2 of the present invention. As shown in Figure 6, the temperature at which sulfur is desorbable of the sub-catalyst 60 is set to a lower temperature than that of the main catalyst 30. Consequently, when sulfur-regeneration control is started, the temperature of the sub-catalyst 60 reaches a temperature at which sulfur is desorbable at an early stage, and the starting time point of a detection period A' is earlier by a corresponding amount. Thus, according to the present embodiment, since a long time period can be secured as the detection period A, for example, even in a case where the temperature of the sub-catalyst 60 rises moderately, the temperature increase amount can be accurately detected during the detection period A'. It is therefore possible to improve the accuracy of estimating the amount of sulfur deposition based on the temperature increase amount.

### Embodiment 3

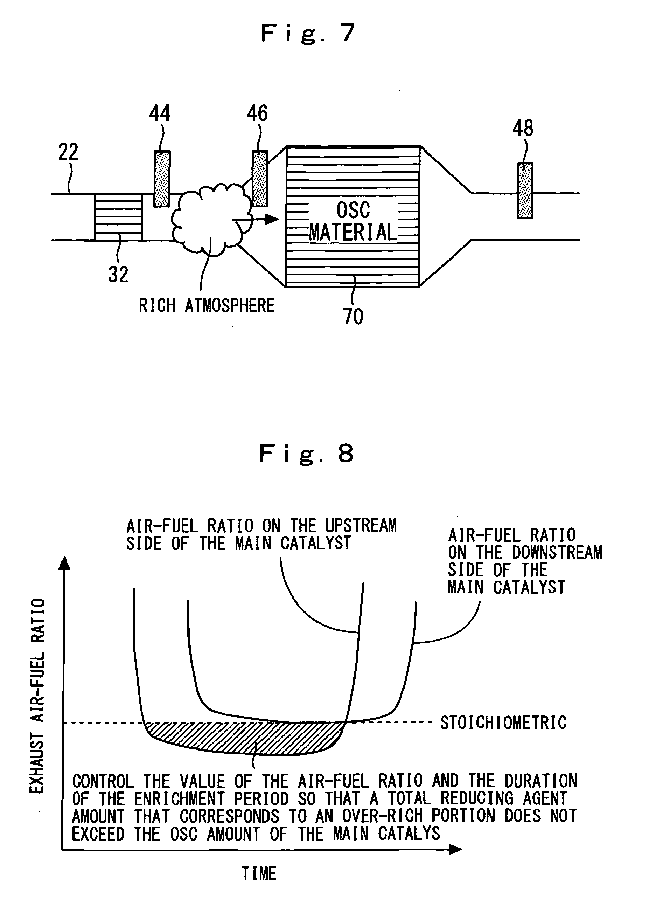

Next, Embodiment 3 of the present invention is described referring to Figure 7 and Figure 8. Although the present embodiment adopts the same system configuration and control (Figure 1 and Figure 4) as the above Embodiment 1, the configuration of the present embodiment differs from that of Embodiment 1 in that an OSC material is carried by the main catalyst. Note that, according to the present embodiment, components that are the same as in Embodiment 1 are denoted by the same reference symbols, and a description of such components is omitted.

### [Features of Embodiment 3]

Figure 7 is an explanatory diagram that illustrates the configuration of an exhaust system according to Embodiment 3 of the present invention. Although a main catalyst 70 is constituted by a NOx catalyst that is approximately the same as that of Embodiment 1, the main catalyst 70 carries an oxygen storage capacity (OSC) material that has an oxygen storage capacity. According to this configuration, the main catalyst 70 can efficiently trap SOx that desorbs from a sub-catalyst 32 when sulfur-regeneration control is executed.

More specifically, when sulfur-regeneration control is executed, exhaust gas is maintained in a rich atmosphere (reducing atmosphere) by fuel that serves as a reducing agent, and reducing agent components such as SOx, HC, CO, and H2 included in the exhaust gas react with oxygen that is released from the OSC material. At that time, the SOx is trapped by the main catalyst 70 by the reaction with oxygen. Accordingly, the main catalyst 70 can efficiently trap SOx that desorbs from the sub-catalyst 32, in the presence of oxygen that had been stored in the OSC material. Therefore, even if sulfur desorbs from the sub-catalyst 32 during a detection period in which a temperature increase amount of the sub-catalyst 32 is being detected, exhaust emissions can be maintained at a favorable level.

Further, according to the present embodiment, when enriching the exhaust air-fuel ratio by sulfur-regeneration control, the air-fuel ratio value and the duration of the enrichment period are appropriately controlled by taking into consideration the oxygen storage capacity of the OSC material, and the exhaust air-fuel ratio on the downstream side of the main catalyst 70 is maintained at the stoichiometric air-fuel ratio. Figure 8 is a characteristics diagram showing the exhaust air-fuel ratio on the upstream side and the downstream side of the main catalyst. As shown in Figure 8, the value of the air-fuel ratio and the duration of the enrichment period are controlled so that a total reducing agent amount that corresponds to an over-rich portion (the total amount of reducing agent contributing to enrichment) does not exceed the OSC amount of the main catalyst 70 (total amount of oxygen stored in the OSC material). This control is performed as a part of the above described air-fuel ratio feedback control.

### Embodiment 4

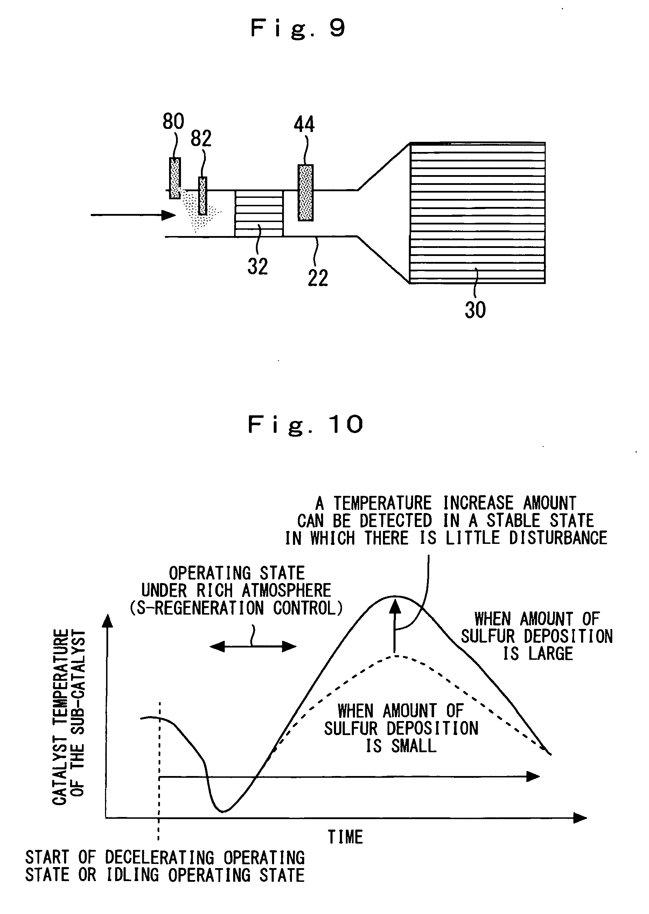

Next, Embodiment 4 of the present invention is described referring to Figures 9 to 11. Although the present embodiment adopts the same system configuration (Figure 1) as Embodiment 1, the configuration of the present embodiment differs from Embodiment 1 in the respect that estimation of the amount of sulfur deposition is carried out in a specific operating state. Note that, according to the present embodiment, components that are the same as in Embodiment 1 are denoted by the same reference symbols, and a description of such components is omitted.

### [Features of Embodiment 4]

Figure 9 is an explanatory drawing that illustrates the configuration of an exhaust system according to Embodiment 4 of the present invention. As shown in Figure 9, a fuel addition valve 80 and a glow plug (spark plug) 82 are provided in an exhaust passage 22. The fuel addition valve 80 is constituted by an electromagnetic valve or the like that is controlled by the ECU 50, and is arranged on an upstream side of a sub-catalyst 32. The fuel addition valve 80 adds fuel that serves as a reducing agent to exhaust gas when executing the above described NOx reduction control or sulfur-regeneration control. The glow plug 82 is arranged at a position that is on the downstream side of the fuel addition valve 80 and the upstream side of the sub-catalyst 32, and is configured so as to heat exhaust gas when a current is applied thereto from the ECU 50. Thus, by activating the glow plug 82, the ECU 50 can stabilize the temperature of exhaust gas flowing into the sub-catalyst 32 and can maintain the temperature in a given reference state.

Further, according to the present embodiment, a configuration is adopted such that, when the operating state of the internal combustion engine is any one of a decelerating operating state, an idling operating state, and a state immediately before operation of the internal combustion engine stops, sulfur-regeneration control is executed and the above described processing to estimate the amount of sulfur deposition is performed while the sulfur-regeneration control is being executed. Figure 10 is an explanatory diagram that illustrates a state in which the amount of sulfur deposition is estimated during a deceleration operation or an idling operation. During execution of a deceleration operation or an idling operation, the operating state of the internal combustion engine is stable and changes in the flow rate and temperature of the exhaust gas are small. Also, in a state immediately before the internal combustion engine is stopped, the flow rate and temperature of the exhaust gas are in a stable state. Accordingly, in these operating states, for example, if processing is executed to estimate the amount of sulfur deposition while stabilizing the exhaust gas temperature by activating the glow plug 82, a temperature increase amount of the sub-catalyst 32 can be accurately detected in a state in which there is little disturbance. It is thereby possible to improve the accuracy of estimating the amount of sulfur deposition.

### [Specific processing to realize Embodiment 4]

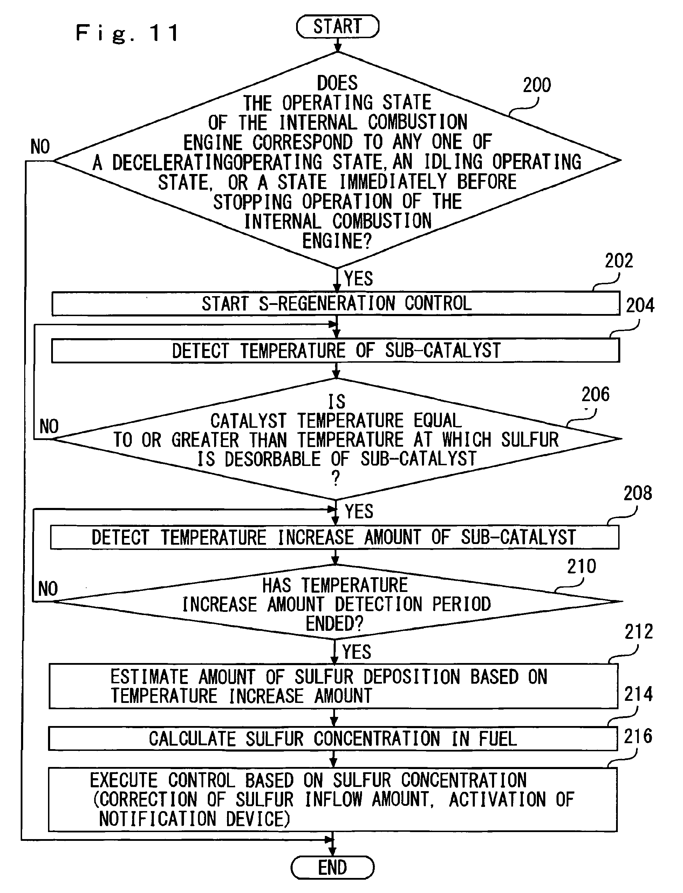

Figure 11 is a flowchart that illustrates control executed by the ECU according to Embodiment 4 of the present invention. The routine shown in Figure 11 is repeatedly executed during operation of the internal combustion engine. According to this routine, first, the ECU determines whether or not the operating state of the internal combustion engine corresponds to any one of a decelerating operating state, an idling operating state, or a state immediately before stopping operation of the internal combustion engine (step 200). If the result determined in step 200 is negative, the ECU ends the current control. In contrast, if the result determined in step 200 is affirmative, the ECU executes the processing of steps 202 to 216. The processing in steps 202 to 216 is the same as the processing in steps 102 to 116 of Embodiment 1 (Figure 4). Thus, the amount of sulfur deposition on the main catalyst 30 can be estimated in a stable state.

Note that, according to the above embodiments, steps 100 and 102 in Figure 4 show specific examples of regeneration control means according to claim 1, and steps 200 and 202 in Figure 11 show specific examples of regeneration control means according to claim 5. Further, steps 112 and 212 in Figure 4 and Figure 11, respectively, show specific examples of sulfur deposition amount estimation means, steps 114 and 214 in Figure 4 and Figure 11, respectively, show specific examples of sulfur concentration calculation means, and steps 116 and 216 in Figure 4 and Figure 11, respectively, show specific examples of correction means and notification means.

In the above embodiments, examples are described in which the present invention is applied to the internal combustion engine 10 that is constituted by a diesel engine. However, application of the present invention is not limited to a diesel engine, and the present invention can be broadly applied to various kinds of internal combustion engines including gasoline engines.

Further, the present invention is not limited to individually realizing the configurations described in Embodiments 1 to 4. For example, according to the present invention, a system may also be realized by arbitrarily combining two, three, or four of the configurations among the configurations described in Embodiments 1 to 4.

### Description of Reference Numerals

10 internal combustion engine, 12 cylinder, 14 piston, 16 combustion chamber, 18 crankshaft, 20 intake passage, 22 exhaust passage, 24 air flow meter, 26 throttle valve, 28 throttle motor, 30,70 main catalyst, 32,60 sub-catalyst, 34 fuel injection valve, 38 intake valve, 40 exhaust valve, 42 crank angle sensor, 44 catalyst temperature sensor, 46,48 air-fuel ratio sensor, 50 ECU, 80 fuel addition valve, 82 glow plug

## Claims

1. A control apparatus for an internal combustion engine (10), comprising:
a main catalyst (30, 70) that is provided in an exhaust passage (22) of the internal combustion engine (10), and comprises either a NOx catalyst that stores NOx contained in an exhaust gas or a sulfur trap catalyst that traps SOx contained in an exhaust gas;
a sub-catalyst (32, 60) that is provided in the exhaust passage (22) on an upstream side of the main catalyst (30, 70), and that comprises a storage agent that stores SOx contained in an exhaust gas;
catalyst temperature detection means (44) that detects a catalyst temperature that is a temperature of the sub-catalyst (32, 60) or a temperature of an exhaust gas that passes through the sub-catalyst (32, 60), on an upstream side of the main catalyst (30, 70); and
regeneration control means that performs at least sulfur-regeneration control for desorbing SOx that is stored in the sub-catalyst (32, 60);
**characterized by** further comprising sulfur deposition amount estimation means that calculates an amount of an increase in the catalyst temperature during execution of the sulfur-regeneration control, and estimates an amount of sulfur deposition on the main catalyst (30, 70) based on the temperature increase amount.

2. The control apparatus for an internal combustion engine (10) according to claim 1, wherein the sub-catalyst (32, 60) is formed to have a smaller heat capacity than the main catalyst (30, 70).

3. The control apparatus for an internal combustion engine (10) according to claim 1 or 2, wherein the sub-catalyst (60) is formed using a material that has a lower basicity than the main catalyst (30, 70).

4. The control apparatus for an internal combustion engine (10) according to any one of claims 1 to 3, wherein the main catalyst (70) comprises an OSC material that has an oxygen storage capacity.

5. The control apparatus for an internal combustion engine (10) according to any one of claims 1 to 4, wherein:
the regeneration control means executes the sulfur-regeneration control in a case where an operating state of the internal combustion engine (10) is a decelerating operating state, an idling operating state, or a state immediately before stopping operation; and
the sulfur deposition amount estimation means is configured to estimate the amount of sulfur deposition during the sulfur-regeneration control.

6. The control apparatus for an internal combustion engine (10) according to any one of claims 1 to 5, further comprising sulfur concentration calculation means that, when the sulfur-regeneration control is repeatedly executed at intervals, calculates a sulfur concentration in a fuel based on a fuel consumption amount and an oil consumption amount during the interval and an estimated value of the amount of sulfur deposition.

7. The control apparatus for an internal combustion engine (10) according to claim 6, further comprising correction means that corrects an inflow amount of sulfur that flows into the main catalyst (30, 70) based on a sulfur concentration in the fuel.

8. The control apparatus for an internal combustion engine (10) according to claim 6 or 7, further comprising notification means that, when a sulfur concentration in the fuel is higher than a reference value, notifies that the sulfur concentration is high.

## Patentansprüche

1. Steuervorrichtung für eine Verbrennungskraftmaschine (10), aufweisend:
einen Hauptkatalysator (30, 70), der sich in einem Abgasstrang (22) der Verbrennungskraftmaschine (10) befindet und entweder einen NOx-Katalysator, der in einem Abgas enthaltenes NOx speichert, oder einen Schwefelauffangkatalysator, der in einem Abgas enthaltenes SOx auffängt, aufweist;
einen Subkatalysator (32, 60), der sich in dem Abgasstrang (22) auf einer Stromaufwärtsseite des Hauptkatalysators (30, 70) befindet und der ein Speicherungsmittel aufweist, das in einem Abgas enthaltenes SOx speichert;
eine Katalysatortemperaturerfassungseinrichtung (44), die auf einer Stromaufwärtsseite des Hauptkatalysators (30, 70) eine Katalysatortemperatur erfasst, bei der es sich um eine Temperatur des Subkatalysators (32, 60) oder eine Temperatur eines Abgases handelt, das durch den Subkatalysator (32, 60) strömt; und
eine Erholungssteuerungseinrichtung, die zumindest eine Schwefelerholungssteuerung durchführt, um SOx zu desorbieren, das in dem Subkatalysator (32, 60) gespeichert ist;
**dadurch gekennzeichnet, dass** sie ferner eine Schwefelablagerungsmengen-Schätzeinrichtung aufweist, die eine Katalysatortemperaturzunahmegröße während des Ausführens der Schwefelerholungssteuerung berechnet, und auf Basis der Temperaturzunahmegröße eine Schwefelablagerungsmenge an dem Hauptkatalysator (30, 70) schätzt.

2. Steuervorrichtung für eine Verbrennungskraftmaschine (10) nach Anspruch 1, wobei der Subkatalysator (32, 60) so ausgebildet ist, dass er eine geringere Wärmekapazität aufweist als der Hauptkatalysator (30, 70).

3. Steuervorrichtung für eine Verbrennungskraftmaschine (10) nach Anspruch 1 oder 2, wobei der Subkatalysator (60) unter Verwendung eines Materials ausgebildet wird, das eine niedrigere Basizität als der Hauptkatalysator (30, 70) aufweist.

4. Steuervorrichtung für eine Verbrennungskraftmaschine (10) nach einem der Ansprüche 1 bis 3, wobei der Hauptkatalysator (70) ein OSC-Material aufweist, das eine Sauerstoffspeicherfähigkeit aufweist.

5. Steuervorrichtung für eine Verbrennungskraftmaschine (10) nach einem der Ansprüche 1 bis 4, wobei:
die Erholungssteuerungseinrichtung die Schwefelerholungssteuerung in einem Fall ausführt, in dem ein Betriebszustand der Verbrennungskraftmaschine (10) ein Verzögerungsbetriebszustand, ein Leerlaufbetriebszustand oder ein Zustand unmittelbar vor dem Ende des Betriebs ist; und
die Schwefelablagerungsmengen-Schätzeinrichtung so konfiguriert ist, dass sie die Schwefelablagerungsmenge während der Schwefelerholungssteuerung schätzt.

6. Steuervorrichtung für eine Verbrennungskraftmaschine (10) nach einem der Ansprüche 1 bis 5, ferner aufweisend eine Schwefelkonzentrationsberechnungseinrichtung, die, wenn die Schwefelerholungssteuerung wiederholt in Intervallen ausgeführt wird, eine Schwefelkonzentration in einem Kraftstoff auf Basis einer Kraftstoffverbrauchsmenge und einer Ölverbrauchsmenge während des Intervalls und einen geschätzten Wert der Menge der Schwefelablagerung berechnet.

7. Steuervorrichtung für eine Verbrennungskraftmaschine (10) nach Anspruch 6, ferner aufweisend eine Korrektureinrichtung, die auf Basis einer Schwefelkonzentration in dem Kraftstoff eine Schwefel-Einströmmenge korrigiert, die in den Hauptkatalysator (30, 70) strömt.

8. Steuervorrichtung für eine Verbrennungskraftmaschine (10) nach Anspruch 6 oder 7, ferner aufweisend eine Benachrichtigungseinrichtung, die, wenn eine Schwefelkonzentration in dem Kraftstoff höher ist als ein Referenzwert, eine Benachrichtigung vornimmt, dass die Schwefelkonzentration hoch ist.

## Revendications

1. Dispositif de commande pour un moteur à combustion interne (10), comprenant :
un catalyseur principal (30, 70) qui est disposé dans un conduit d'échappement (22) du moteur à combustion interne (10), et qui comprend soit un catalyseur pour les oxydes d'azote (NOx) qui stocke les NOx contenus dans un gaz d'échappement soit un catalyseur de séparation du soufre qui sépare les oxydes de soufre (SOx) contenus dans le gaz d'échappement ;
un catalyseur secondaire (32, 60) qui est disposé dans le conduit d'échappement (22) du côté amont du catalyseur principal (30, 70), et qui comprend un agent de stockage qui stocke les SOx contenus dans le gaz d'échappement ;
un moyen (44) de détection de température de catalyseur qui détecte une température de catalyseur qui est la température du catalyseur secondaire (32, 60) ou la température d'un gaz d'échappement qui passe à travers le catalyseur secondaire (32, 60), du côté amont du catalyseur principal (30, 70) ; et
un moyen de commande de régénération qui effectue au moins une commande de régénération du soufre destinée à désorber les SOx qui sont stockés dans le catalyseur secondaire (32, 60),
**caractérisé en ce qu'**il comprend en outre un moyen d'estimation de quantité de dépôt de soufre qui calcule un montant d'augmentation de la température de catalyseur durant l'exécution de la commande de régénération du soufre, et qui estime une quantité de dépôt de soufre sur le catalyseur principal (30, 70) en se basant sur le montant d'augmentation de température.

2. Dispositif de commande selon la revendication 1 pour un moteur à combustion interne (10), dans lequel le catalyseur secondaire (32, 60) est formé de façon à avoir une capacité thermique plus petite que le catalyseur principal (30, 70).

3. Dispositif de commande selon la revendication 1 ou 2 pour un moteur à combustion interne (10), dans lequel le catalyseur secondaire (60) est formé en utilisant une matière qui a une alcalinité plus basse que le catalyseur principal (30, 70).

4. Dispositif de commande selon l'une quelconque des revendications 1 à 3 pour un moteur à combustion interne (10), dans lequel le catalyseur principal (70) comprend une matière OSC qui a une capacité de stockage d'oxygène.

5. Dispositif de commande selon l'une quelconque des revendications 1 à 4 pour un moteur à combustion interne (10),
dans lequel le moyen de commande de régénération exécute la commande de régénération du soufre dans le cas où l'état de fonctionnement du moteur à combustion interne (10) est un état de fonctionnement en décélération, un état de fonctionnement au ralenti, ou un état immédiatement avant une opération d'arrêt, et
dans lequel le moyen d'estimation de quantité de dépôt de soufre est constitué pour estimer la quantité de dépôt de soufre durant la commande de régénération du soufre.

6. Dispositif de commande selon l'une quelconque des revendications 1 à 5 pour un moteur à combustion interne (10), comprenant en outre un moyen de calcul de teneur en soufre qui, lorsque la commande de régénération du soufre est exécutée de façon répétée à des intervalles, calcule la teneur en soufre dans un carburant en se basant sur une quantité de carburant consommé et une quantité d'huile consommée durant l'intervalle et une valeur estimée de la quantité de dépôt de soufre.

7. Dispositif de commande selon la revendication 6 pour un moteur à combustion interne (10), comprenant en outre un moyen de correction qui corrige une quantité entrante de soufre qui s'écoule dans le catalyseur principal (30, 70) en se basant sur la teneur en soufre dans le carburant.

8. Dispositif de commande selon la revendication 6 ou 7 pour un moteur à combustion interne (10), comprenant en outre un moyen d'avertissement qui, lorsque la teneur en soufre dans le carburant est plus élevée qu'une valeur de référence, avertit que la teneur en soufre est élevée.
